# EUROPEAN PATENT APPLICATION

(11) **EP 4 764 441 A1**
(43) Date of publication of application: **24.06.2026**
(21) Application number: 24383406.6
(22) Date of filing: 19.12.2024
(51) Int. Cl.: G01M 3/20, A62B 27/00, G01N 15/08

(54) **LEAK TESTING APPARATUS FOR TESTING RESPIRATORY PROTECTIVE EQUIPMENT AND METHOD THEREFOR**

(71) Applicant: MEDTECH CATALONIA, S.L., 17005 Girona (ES)
(72) Inventor: BELTRA BONILLO, Jorge, 03690 SAN VICENTE DEL RASPEIG (ES)
(74) Representative: Evens, Paul Jonathan

(57) **Abstract**

An apparatus (100) for testing respiratory protective equipment (200) for leaks to the outside of the same comprises a cabin (110), generators (140, 150) for supplying NaCl aerosol and air to the cabin (110), a measuring equipment (160) for determining leaks in the respiratory protective equipment (200) to the outside of the same based on a concentration of NaCl aerosol flowing out of the cabin (110) with respect to a reference concentration of NaCl aerosol, and an air extractor (170) for extracting air from the cabin (120) to the measuring equipment (160). The cabin (110) has access area (130) for placing a Sheffield torso (220) in the cabin interior (120) on which the respiratory protective equipment (200) to be tested is fitted.

## Description

The present disclosure refers to respiratory protective equipment and, in particular, to testing respiratory protective garment. Specifically, the present disclosure relates to an apparatus for testing the occurrence of leaks in respiratory protective equipment and a method therefor.

### BACKGROUND ART

Respiratory protective equipment, either they are non-powered and powered, require a good sealing as they are commonly used in hazardous or highly polluted environments such as those intended to emergencies, investigation, rescue, disinfection, disposal of toxic waste, production of chemical substances, agricultural pesticides, medical treatment, and other applications. In general, protective equipment must meet special specifications and tests, in particular a certain degree of tightness.

Detecting the sealing performance between respiratory protective equipment, in particular, a respiratory protective garment, covering at least partially the human body to provide protection at least to the torso, arms or thighs of the user is crucial for effectively protecting the human body, in particular, the head and the airways or respiratory tract.

In CN103808627A, tightness in respiratory protective equipment is tested by providing directly into the protective clothing to be tested a mix of a gas gel and a gas through a control device. A leakage in the protective clothing is measured by a leak detector that detects whether the protective garment has a leak point by using a relative concentration change of the gas gel on the outer surface of the protective garment.

A similar test is disclosed in WO2007003191A1 for detecting a leakage in a gas impermeable object. In this case, the object is inflated with a gas having a temperature that is different to a temperature of an outer surface of said object. A leakage of gas is detected through the material of the object by identifying a temperature difference between the first and the second temperatures.

Tests methods and apparatuses are still needed in the art to ensure suitable tightness performance to respiratory protective equipment and to avoid patients and third parties in general from being exposed to pathogenic microorganisms and toxic substances coming from users wearing the respiratory protective equipment.

### SUMMARY

A leak testing apparatus is disclosed herein for testing respiratory protective equipment for leaks to the outside of the same. The respiratory protective equipment to be tested is of the type comprising a garment such as a hood for at least covering a user's body portion.

The present leak testing apparatus comprises a cabin defining a cabin interior and including an access area. The cabin may be made of any suitable material, such as a leak-proof transparent material. The access area of the cabin is preferably configured for a Sheffield torso to pass there through into the cabin interior. For this purpose, the access area is advantageously arranged in a bottom portion or the cabin. A neoprene elastic portion may be provided in the access area extending outwards from the cabin.

A NaCl aerosol flow generator is provided capable of supplying a NaCl aerosol to the cabin interior. An air flow generator is also provided capable of supplying air to the cabin interior. It is preferred that the NaCl aerosol flow generator and the air flow generator are arranged such that a mixture of NaCl aerosol and air is formed before entering the cabin interior.

A measuring equipment is arranged for determining leaks in the respiratory protective equipment to the outside of the same based on a concentration of NaCl aerosol flowing out of the cabin with respect to a reference concentration of NaCl aerosol. The measuring equipment may include a flame photometer. A reference mass concentration of NaCl aerosol within the mixture supplied to the cabin interior may be, for example, 4-12 mg/m³.

The present leak testing apparatus further includes an air extractor for extracting air from the cabin interior to the measuring equipment. If provided, the air extractor preferably comprises a forced-draft fan.

In some cases, it could be advantageous to include a manual or power driven cabin lifting mechanism for placing the cabin of the leak testing apparatus at a desired height. If such cabin lifting mechanism is provided, means for locking the cabin at a desired height from the ground may be included.

The cabin may include a door. The door would be suitably sized to provide access to the cabin interior, for example to place a respiratory protective equipment to be tested in the cabin interior.

A method for testing respiratory protective equipment is also disclosed herein. In particular, the present method is applied for testing respiratory protective equipment for leaks to the outside of the same. The steps of the present method that will be described in the following can be carried out using a leak testing apparatus as described above.

The method for testing respiratory protective equipment comprises placing a respiratory protective equipment in the interior of a cabin of a leak testing apparatus as the one described above, for example. Generally, placing a respiratory protective equipment in the cabin interior is performed by fitting the respiratory protective garment on a Sheffield torso in the cabin interior.

A flow of a mixture of NaCl aerosol and air is supplied to the cabin interior of said leak testing apparatus. This is preferably performed by mixing a flow of a NaCl aerosol with a flow of air before entering the cabin of the leak testing apparatus.

Air is extracted from the cabin interior such that a pressure therein is at least substantially equal to a pressure outside the cabin. Then, after a first period of time when a steady state of NaCl aerosol-air mixture concentration in the cabin interior has been reached, such as, for example, 20 min., an air concentration is monitored so that a 100% concentration is assigned to the calibration line and a 0% concentration is assigned to the air supplied to the cabin interior before being mixed with NaCl aerosol;

The flow of NaCl aerosol to the cabin interior is stopped while the air flow to the cabin interior is maintained.

After a second period of time, such as, for example, 20 min., the NaCl aerosol that was previously supplied is extracted such that the cabin interior is free from NaCl aerosol. A flow of a mixture of NaCl aerosol and air is supplied to the interior of the protective equipment to be tested, which was previously placed in the cabin interior. Preferably, the protective equipment is fitted on a Sheffield torso so that the flow of a mixture of NaCl aerosol and air is supplied to the interior of said Sheffield torso on which the protective equipment is fitted.

NaCl aerosol is extracted out of the cabin interior into the measuring equipment. Particulate leaks in the respiratory protective equipment to the outside of the same can be then determined based on a concentration of NaCl aerosol flowing out of the cabin with respect to a reference concentration of NaCl aerosol corresponding to a 100% concentration of the calibration line. A reference mass concentration of NaCl aerosol within the mixture supplied to the cabin interior may be, for example, 4-12 mg/m³.

When a concentration of the NaCl aerosol flowing out of the cabin is found to be 80 percent lower than a reference concentration, leaks in the respiratory protective equipment to the outside of the same are considered acceptable.

The leak testing apparatus for testing respiratory protective equipment and the method therefor described above have been found to provide a number of significant advantages. The present testing apparatus is simple, compact, and cost effective. The length of the test is estimated to be about 1.5-2 hours, taking into account the time needed to set up the respiratory protective equipment, so the present testing apparatus also allows a rapid operation. The testing apparatus has been found to allow respiratory protective equipment to be efficiently test for possible leaks coming from filters, seals, seams, joints, and parts thereof.

### BRIEF DESCRIPTION OF THE DRAWINGS

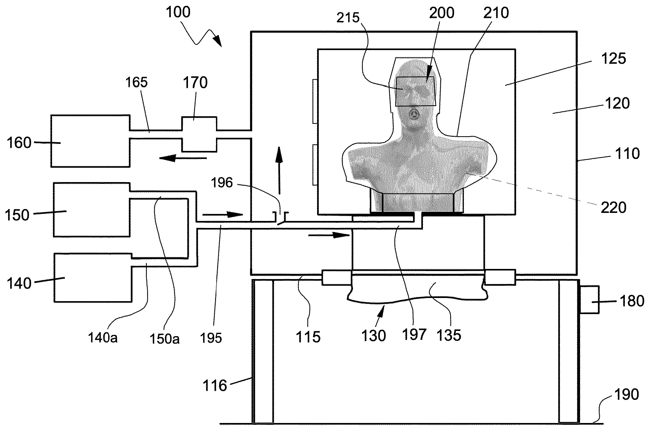

One non-limiting example of the present leak testing apparatus will be described in the following, with reference to the drawing enclosed herein, in which one example has been diagrammatically illustrated.

### DETAILED DESCRIPTION OF EXAMPLES

Reference is made to the particular example of the leak testing apparatus 100 shown in the figure. The leak testing apparatus 100 is intended for testing a respiratory protective equipment 200. It is to be noted that the present leak testing apparatus 100 is configured for performing a specific test for assessing particulate leaks of coming out of a respiratory protective equipment 200.

The respiratory protective equipment 200 to be tested comprises a garment extending covering at least a portion of a wearer's body. The garment in the non-limiting example is a hood 210 made of an airtight synthetic material.

The hood 210 includes a transparent face shield 215. Although not shown, the respiratory protective equipment 200 may include a head support for supporting the respiratory protective equipment 200 on the wearer's head. Other parts such as a fan and air filters, now shown in the drawing, may be included in the respiratory protective equipment 200.

Referring to the leak testing apparatus 100, it comprises a cabin 110 made of a leak-proof transparent material. The cabin 110 comprises a frame made of 30 x 30 mm aluminium profiles for supporting plastic walls. The frame profiles are 700 mm long so as to define a cabin interior 120 of a total constant volume of 300-350 liters. In the particular example shown, the plastic walls of the cabin 110 are made of transparent polycarbonate sheets with UV protection on both sides. The cabin 110 is supported n a cabin support 116 comprising 1500 mm long upright profiles. Thus, the total height of the leak testing apparatus 100 is 2200 mm.

The cabin 110 has a bottom portion 115 where an access area 130 is formed. The access area 130 of the cabin 110 is configured such that a Sheffield torso 220 can be pass there through into the cabin interior 120. The access area 130 includes an elastic portion 135 extending outwards from the cabin 110 for protection and sealing purposes. The elastic portion 135 is made of a highly resilient, impermeable material, such as neoprene. As a result, placing the Sheffield torso 220 into the cabin interior 120 is facilitated. Furthermore, the neoprene elastic portion 135 ensures impermeability of the cabin interior 120. Said elastic portion 135 provides an access opening wide enough for receiving a standard Sheffield torso 220 allowing the shoulders thereof to pass through the cabin interior 120. The elastic portion 135 is preferably provided centrally at the bottom portion 115 of the cabin 110 so that the Sheffield torso 220 is also arranged in a central portion of the cabin interior 120. A belt, not shown, also made of neoprene or the like, may be provided to close said access opening of the elastic portion 135.

Outside the cabin 110 of the leak testing apparatus 100, a NaCl aerosol flow generator 140 is provided. The NaCl aerosol flow generator 140 is configured for supplying a flow of NaCl aerosol to the cabin interior 120. For this purpose, a first inlet duct 140a is provided, one end of which is connected to the NaCl aerosol flow generator 140.

Also outside the cabin 110 of the leak testing apparatus 100, an air flow generator 150 is provided. The air flow generator 150 is configured for supplying a flow of air to the cabin interior 120. For this purpose, a second inlet duct 150a is provided, one end of which is connected to the air flow generator 150.

The respective opposite ends of said first and second inlet ducts 140a, 150a are connected to the cabin interior 120 via a common inlet duct 195. Thus, a mixture of NaCl aerosol and air flows through the common inlet duct 195 to enter the cabin interior 120. A reference mass concentration of NaCl aerosol within the mixture supplied to the cabin interior 120 may be, for example, 4-12 mg/m³.

The common inlet duct 195 is sized to allow an inlet flow rate of 100 l/min and the outlet duct 165 is sized to allow an outlet flow rate of 100-160 l/min. Other sizes are possible depending on the flow rates as required.

A measuring equipment 160 is also provided outside the cabin 110. The measuring equipment 160 includes a sodium flame photometer, not shown. The flame photometer comprises a sample tube, a photomultiplier, a housing, and neutral density filters arranged in the housing. The flame photometer in the measuring equipment 160 allows concentration of inorganic ions, in this case, sodium ions, to be determined. When NaCl is burned, a sodium-specific yellow color is generated with a wavelength of 589 nm, providing information for determining the concentration of NaCl aerosol.

The measuring equipment 160 is connected to the cabin interior 120 through an outlet duct 165. The measuring equipment 160 is arranged for determining leaks in the respiratory protective equipment 200 to the outside of the same. Possible particulate leaks that may be found in the respiratory protective equipment 200 are determined based on a concentration of NaCl aerosol flowing out of the cabin 110 through said outlet duct 165 with respect to a reference concentration of NaCl aerosol.

As shown in the figure, an air extractor 170 is provided. The air extractor 170 comprises a forced-draft fan suitable for extracting air from the cabin interior 120 to the measuring equipment 160 through the outlet duct 165. The forced-draft fan ensures that a suitable flow rate of fluid supplied into the measuring equipment 160 is the same flow rate of fluid flowing out of the measurement equipment 160 so as to validly assessing the occurrence of particulate leaks to the outside of the respiratory protective equipment 200.

A flow meter, not shown, may be provided, for measuring the flow rate of NaCl aerosol fluid flowing out the cabin interior 120. Said flow meter may be provided between the air extractor 170 and the measuring equipment 160.

A power driven cabin lifting mechanism 180 is provided in the example shown for placing the cabin 110 at any desired height, for example both for having a suitable access to the cabin interior 120 through a suitable door 125 that will be described below.
and checking how the test is being conducted. The cabin lifting mechanism 180 is provided in this specific example with means for locking the cabin 120 at a desired height from the ground 190.

The operation of the leak testing apparatus 100 described above for testing the respiratory protective equipment 200 for particulate leaks to the outside of the same is according to the method described hereinbelow.

A Sheffield torso 220 is placed in the interior 120 of the cabin 110 of the leak testing apparatus 100 through the access area 130. The Sheffield torso 220 is made of cast epoxy resin and is mounted on a wooden base. Within the Sheffield torso 220, required tubing made of PVC is provided for the flow of NaCl aerosol and air from the bottom thereof to the respiratory protective equipment 200 fitted thereon. The dimensions of the Sheffield torso 220 in this example are 600 mm x 600 mm x 1570 mm, weighing approximately 22 kg.

Then, a respiratory protective equipment 200 is placed in said interior 120 through the above mentioned door 125 provided in the cabin 110. The respiratory protective equipment 200 is then fitted on the Sheffield torso 220 that was previously placed in the interior 120 of the cabin 110 and the door 125 of the cabin 110 is closed. The door 125 of the cabin 110 includes a seal to ensure effective sealing of the cabin interior 120 when the door 125 is closed.

The leak testing apparatus 100 is then powered so that both the NaCl aerosol flow generator 140 and the air flow generator 150 are operated for respectively supplying a NaCl aerosol flow and an airflow through the first and second inlet ducts 140a, 150a. A flow of a mixture of NaCl aerosol and air is thus supplied to the cabin interior 120 of the leak testing apparatus 100 through the common inlet duct 195 and through a third inlet duct 196. The NaCl aerosol flow and the air flow are thus mixed before entering the cabin 110.

Air is extracted from the cabin interior 120 through the outlet duct 165 by means of the forced-draft fan of the air extractor 170. After a first period of time, for example, of 20 minutes, when a pressure in the cabin interior 120 is at least substantially equal to a pressure outside the cabin 110 such that a steady state of NaCl aerosol-air mixture concentration in the cabin interior 120 has been reached, an air concentration is monitored. A 100% concentration is assigned to a calibration line, and a 0% concentration is assigned to air supplied to the cabin interior 120 before being mixed with NaCl aerosol.

With the air flow generator 150 still in operation to supply an air flow to the cabin interior 120, the NaCl aerosol flow generator 140 is stopped so that no flow of NaCl aerosol is supplied to the cabin interior 120.

After a second period of time, such as, for example, 20 min., the NaCl aerosol that was previously supplied is extracted such that the cabin interior 120 is free from NaCl aerosol. Then the NaCl aerosol flow generator 140 is operated again such that, together with the operation of the air flow generator 150, a flow of a mixture of NaCl aerosol and air is supplied through a fourth inlet duct 197 to the interior of the Sheffield torso 220 and thus to the interior of the protective equipment 200 to be tested.

NaCl aerosol is extracted out of the cabin interior 120 through the outlet duct 165 by means of the forced-draft fan of the air extractor 170 and supplied into the measuring equipment 160.

Then, a concentration of NaCl aerosol flowing out of the cabin interior 120 is determined and compared with a reference concentration of NaCl aerosol corresponding to said 100% concentration of the calibration line. A reference mass concentration of NaCl aerosol within the mixture supplied to the cabin interior may be, for example, 4-12 mg/m³. A preferred reference mass concentration of NaCl aerosol may be 8.6 mg/m³. Other values for reference mass concentration of NaCl aerosol are not ruled out.

Based on differences in concentration found, particulate leaks in the respiratory protective equipment 200 to the outside of the same are determined. For example, when a concentration of the NaCl aerosol flowing out of the cabin 110 is found to be 80 percent lower than a reference concentration, particulate leaks in the respiratory protective equipment 200 to the outside of the same are considered acceptable.

Although one non-limiting example of the present leak testing apparatus has been disclosed herein, many other alternatives, modifications, uses and/or equivalents thereof are envisaged. For example, means for following the track of particulate leaks in the respiratory protective equipment may be provided. Such means may include infrared cameras or particle display systems, configured to identify specific areas that are more prone to leakage, such as seals, seams, joints, etc. The scope of the present disclosure should therefore not be limited by that particular example but should be determined only by a fair reading of the claims that follow.

Reference signs related to the drawings placed in parentheses in a claim are solely for attempting to increase the intelligibility and shall not be construed as limiting the scope of the claim.

## Claims

1. Leak testing apparatus (100) for testing respiratory protective equipment (200) for leaks to the outside of the same, the respiratory protective equipment (200) comprising a garment (210) for at least covering a user's body portion, the leak testing apparatus (100) comprising:
- a cabin (110) defining a cabin interior (120) and including an access area (130);
- a NaCl aerosol flow generator (140) for supplying NaCl aerosol to the cabin interior (120);
- an air flow generator (150) for supplying air to the cabin interior (120);
- a measuring equipment (160) for determining leaks in the respiratory protective equipment (200) to the outside of the same based on a concentration of NaCl aerosol flowing out of the cabin (110) with respect to a reference concentration of NaCl aerosol; and
- an air extractor (170) for extracting air from the cabin interior (120) to the measuring equipment (160).

2. The apparatus (100) of claim 1, wherein the access area (130) of the cabin (110) is configured for a Sheffield torso (220) to pass there through into the cabin interior (120).

3. The apparatus (100) of claim 1 or 2, wherein the access area (130) is provided in a bottom portion (115) or the cabin (110).

4. The apparatus (100) of any preceding claim, wherein access area (130) has a neoprene elastic portion (135) extending outwards from the cabin (110).

5. The apparatus (100) of any preceding claim, wherein the air extractor comprises a forced-draft fan (170).

6. The apparatus (100) of any preceding claim, wherein it further includes a manual or power driven cabin lifting mechanism (180).

7. The apparatus (100) of any preceding claim, wherein it further includes means for locking the cabin (110) at a desired height from the ground (190).

8. The apparatus (100) of any preceding claim, wherein the cabin (110) includes an access door (125) for providing access to the cabin interior (120).

9. The apparatus (100) of any preceding claim, wherein the measuring equipment (160) includes a flame photometer.

10. A method for testing respiratory protective equipment (200) for leaks to the outside of the same through the leak testing apparatus (100) of any preceding claim, the method comprising:
- placing a respiratory protective equipment (200) in the cabin interior (120);
- supplying a flow of a mixture of NaCl aerosol and air to the cabin interior (120);
- extracting air from the cabin interior (120) such that a pressure therein is at least substantially equal to a pressure outside the cabin;
- after a first period of time, when a steady state of NaCl aerosol-air mixture concentration in the cabin interior (120) has been reached, monitoring an air concentration, assigning a 100% concentration to the calibration line and a 0% concentration to air supplied to the cabin interior (120) before being mixed with NaCl aerosol;
- stopping the flow of NaCl aerosol to the cabin interior (120) and maintaining the air flow to the cabin interior (120);
- after a second period of time, extracting the NaCl aerosol that was previously supplied such that the cabin interior (120) is free from NaCl aerosol, and supplying a flow of a mixture of NaCl aerosol and air to the interior of the protective equipment (200);
- extracting NaCl aerosol out of the cabin interior (120) into the measuring equipment (160); and
- determining leaks in the respiratory protective equipment (200) to the outside of the same based on a concentration of NaCl aerosol flowing out of the cabin (110) with respect to a reference concentration of NaCl aerosol corresponding to said 100% concentration of the calibration line.

11. The method of claim 10, wherein the flow of a mixture of NaCl aerosol and air after a second period of time is supplied to the interior of a Sheffield torso (220) on which a protective equipment (200) is fitted.

12. The method of claim 10 or 11, wherein the step of placing a respiratory protective equipment (200) in the cabin interior (120) is performed by fitting the respiratory protective garment (210) on a Sheffield torso (220) in the cabin interior (120).

13. The method of any of the claims 10-12, wherein, at least one of the first and the second periods of time is 20 min.

14. The method of any of the claims 10-13, wherein a deviation of < 80 % of a concentration of the NaCl aerosol flowing out of the cabin (110) with respect to a reference concentration is considered acceptable.

15. The method of claim 14, wherein a reference mass concentration of NaCl aerosol within the mixture supplied to the cabin interior (120) is 4-12 mg/m³.
